# EUROPÄISCHE PATENTSCHRIFT

(11) **EP 1 504 639 B1**
(45) Veröffentlichungstag und Bekanntmachung des Hinweises auf die Patenterteilung: **28.12.2011**
(21) Anmeldenummer: 04018455.8
(22) Anmeldetag: 04.08.2004
(51) Int. Cl.: A01B 35/22

(54) **Bodengrubber mit Scharschnellwechselsystem**
Soil sweep with quick-exchange system
Outil d'ameublissement du sol avec système d'échange rapide

(30) Priorität: 07.08.2003 DE 10336934
(43) Veröffentlichungstag der Anmeldung: 09.02.2005
(73) Patentinhaber: Kerner, Gabriele, 89344 Aislingen (DE); Kerner, Jürgen, 89344 Aislingen (DE); Kerner, Stefan, 89344 Aislingen (DE); Kerner, Tobias Josef, 89344 Aislingen (DE); Kerner, Anja Maria, 89344 Aislingen (DE)
(72) Erfinder: Kerner, Josef, Deceased (DE)
(74) Vertreter: Gallo, Wolfgang

(56) Entgegenhaltungen:
- WO-A-88/06398
- DE-A- 10 013 621
- US-A- 1 520 079
- US-A- 1 650 007
- US-A- 1 769 545
- US-A- 1 872 623

## Beschreibung

Die Erfindung betrifft einen Bodengrubber, dessen Grubberzinken jeweils aus einem Haltestiel mit Scharhalter, einem Mittelschar und Flügelscharen besteht. Das Mittelschar kann aus Scharspitze und Leitblech oder auch als Wendeschar ausgebildet sein. Ein Wendeschar besteht dabei aus einem Leitblech mit an beiden Enden angeordneten Scharspitzen, so daß das Schar nach Verschleiß einer Scharspitze umgedreht werden kann.

Bodengrubber der eben genannten Gattung können mit ein- oder mehrteiligen Scharen ausgerüstet sein. Bei Grubberzinken mit einteiligen Flügelscharen ist das Schar durch ein entsprechend geformtes einteiliges Scharblatt gebildet, das am Scharhalter des Haltestils montiert ist. Bei mehrteiligen Scharen sind Mittelschar und Scharflügel als gesonderte Scharteile ausgebildet und am Scharhalter montiert.

Einteilige Flügelscharen haben aber den Nachteil, daß die bei der Bodenbearbeitung erreichte Durchmischung des Erdreichs gegenüber mehrteiligen Scharen mit vorauslaufender Scharspitze nicht zufriedenstellend ist und die unter Veschleiß stehenden Scharteile nicht einzeln austauschbar sind.

Mehrteilige Schare ergeben eine bessere Durchmischung des Erdreichs und damit ein besseres Arbeitsergebnis. Mehrteilige Scharen haben nicht nur den Vorteil, daß die viel schneller verschleißende vorauslaufende Scharspitze der Mittelschar einzeln austauschbar ist, sondern auch den Vorteil, daß die Grubberzinken wahlweise in der kompletten Ausstattung mit Mittelschar und Scharflügeln oder nach Demontieren der Scharflügel nur mit dem Mittelschar allein benutzt werden können. Der Einsatz des Bodengrubbers mit Mittelschar und Scharflügeln erfolgt dabei für die flache Bodenbearbeitung, während bei der tieferen Bodenbearbeitung die Scharflügel demontiert (oder durch eine andere Scharform ersetzt) werden, weil sonst ein zu hoher Kraftbedarf notwendig wäre.

Aus der DE 36 28 910 C2 ist ein Grubberzinken mit mehrteiligem Scharsystem der oben beschriebenen Art bekannt. Dort ist das Mittelschar, das aus Leitblech und gesonderter Scharspitze besteht, an der Frontseite des Scharhalters befestigt, während die Scharflügel einzeln mit mehreren Schrauben an beiderseits seitlich abstehenden Flanschteilen des Scharhalters montiert sind. Zum Demontieren der Scharflügel müssen also immer mehrere Schrauben gelöst werden. Das ist, da ein Bodengrubber immer eine größere Anzahl von Grubberzinken hat und die Schrauben meistens zusätzlich mit Erdreich behaftet sind, sehr zeitaufwendig und mühsam.

Bei den bekannten einteiligen Flügelscharen kommen auch Schnellwechselsysteme mit konischen Halteplatten zum Einsatz, doch sind Grubberzinken mit solche einteiligen Scharen, wie oben dargestellt, mit erheblichen Nachteilen behaftet.

Der Erfindung liegt daher die Aufgabe zugrunde, einen Grubberzinken mit mehrteiligem Scharsystem zu schaffen, das sich sowohl für flache als auch für tiefe Bodenbearbeitung mit gutem Bodendurchmischungsergebnis eignet und mit wenig Aufwand umzurüsten ist.

Diese Aufgabe wird erfindungsgemäß durch die im Anspruch 1 angegebene Anordnung gelöst.

Durch die erfindungsgemäße Anordnung ist ein schneller und kostengünstiger Wechsel der einzelnen Scharkomponenten für verschiedene Anwendungsfälle und zum Austausch der Verschleißteile gewährleistet. Besonders vorteilhaft ist der schnelle und einfache Wechsel der Flügelscharen. Bei der flachen Bodenbearbeitung ist es nämlich sehr wichtig, daß ein ebener und durchgehender Bearbeitungshorizont entsteht, damit Unkrautsamen und Ausfallgetreide nicht zu tief in den Boden eingemischt werden und somit schnell und nahezu vollständig zum Keimen gelangen. Für die tiefere Bodenlockerung ist der ebene Bearbeitungshorizont nicht erforderlich und wirkt sich eher nachteilig aus, denn durch die breiten Flügelscharen, die bei der flachen Bodenbearbeitung zum ganzflächigen Durchschneiden erforderlich sind, tendieren im Untergrund zur Bildung einer glatten und festen Schicht, die für die Wurzeln der nachfolgenden Kulturpflanzen schädlich wäre. Ein weiterer Nachteil der breiten Flügelscharen bei der tiefen Bodenbearbeitung ist der enorme Kraftbedarf bei tieferer Durchdringung des Bodens. Bei dieser Bearbeitungsart ist vielmehr eine streifenweise Lockerung von unterschiedlicher Bearbeitungstiefe wünschenswert, so daß es sinnvoll ist, hier ohne Flügelscharen zu arbeiten. Für die flache Saatbeetbereitung kann anstatt eines flachen Flügelschars auch ein gezackter Flügel oder ein aus einzelnen Streifen, Profilstäben oder Federstäben zusammengesetzter Flügel montiert werden. Durch das schnell zu wechselnde Flügelschar kann der Anwender für jede Arbeitstiefe die richtige und optimale Scharform wählen, wenn mehrere Flügelscharformen zur Auswahl stehen, oder bei der Tiefenlockerung des Unterbodens nach Abnehmen der Flügelscharen ganz ohne diese Arbeiten. Das Mittelschar kann bei allen Bearbeitungsarten immer in der gleichen Lage mit dem optimalen Schnittwinkel verbleiben.

Je nach Anwendungsfall und Häufigkeit des Wechselns der Flügelscharen kann die Verbindung mit nur einer einzigen Schraube, einem Schnellverschluß oder einem Stecksystem erfolgen.

Ein Ausführungsbeispiel der Erfindung wird nachstehend unter Bezugnahme auf die anliegenden Zeichnungen mehr im einzelnen beschrieben. Dabei zeigt:
- Fig.1: eine perspektivische Ansicht eines Grubberzinkens nach der Erfindung schräg von vom,
- Fig. 2: eine perspektivische Ansicht des Grubberzinkens nach Fig. 1 schräg von hinten.
- die Fig. 3a bis 8a: jeweils ein Flügelschar des Grubberzinkens mit jeweils einer anderen Variante des Schnellbefestigungssystems, und
- die Fig. 3b bis 8b: jeweils eine Seitenansicht des Grubberzinkens mit dem Flügelscharbefesetigungssystem zur Befestigung des Flügelschars nach den Fig. 3a bis 8a.

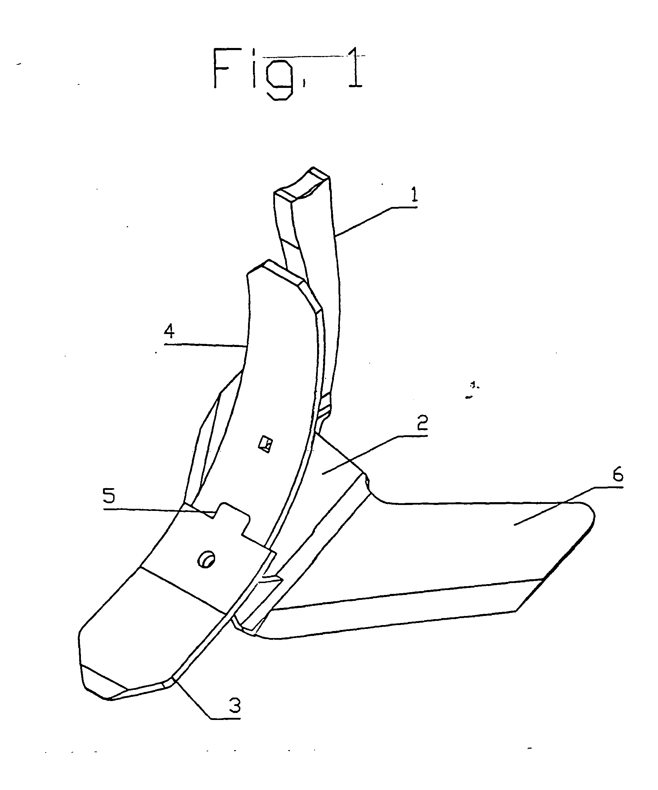

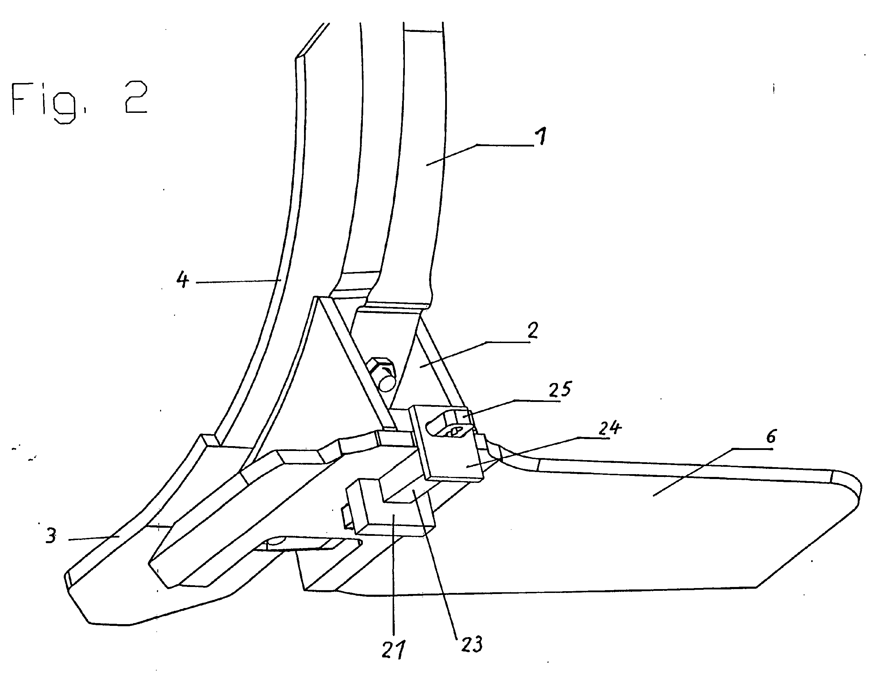

Die Figuren 1 und 2 zeigen in perspektivischen Ansichten von vom und von hinten einen Grubberzinken nach der Erfindung. Am dargestellten unteren Teil des Haltestiels 1 ist ein Scharträger 2 angebracht.

Ein Mittelschar besteht aus einer Scharspitze 3 und einem Leitblech 4, die als gesonderte Teile ausgebildet sind, wobei nach der Darstellung die Scharspitze 3 etwas breiter sein kann als das Leitblech 4. Beide Elemente liegen an der Vorderseite des unteren Endes des Stiels 1 bzw. des Scharträgers 2 an und sind dort mit jeweils einer Schraube befestigt. Eine hintere Lasche 5 der Scharspitze 3 greift in eine entsprechende Aussparung des Leitblechs 4 ein und bildet damit eine Formschlussverbindung.

An der Rückseite bzw. Unterseite des Scharträgers 2 ist ein einteiliges Flügelschar 6 montiert, und zwar mittels einer Schnellverbindung, wie im folgenden noch ausgeführt wird.

Wie man also sieht, ist das Mittelschar 3, 4 etwas vorderhalb des Flügelschars 6 angeordnet und damit im Betrieb des Grubberzinkens vorauseilend. Die Scharspitze 3 des Mittelschars 3, 4 ist bei Verschleiß leicht auswechselbar, wozu lediglich die betreffende eine Schraube gelöst werden muß.

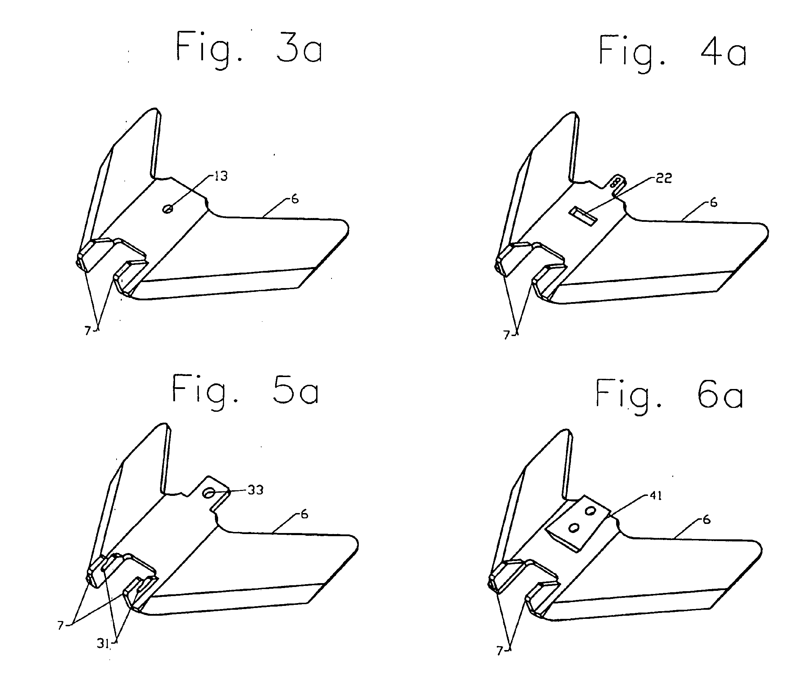

Das häufig an- und abzumontierende Flügelschar 6 ist, wie gesagt, mit einer Schnellbefestigung am Scharträger 2 montierbar. Sechs beispielsweise Ausführungsformen einer solchen Schnellbefestigung werden im folgenden anhand der Figuren 3a bis 8a sowie 8b bis 6b beschrieben. Das Flügelschar 6 kann damit, wenn der Grubberzinken nur mit dem Mittelschar allein für eine Tiefenbearbeitung des Bodens verwendet werden soll, leicht gelöst werden und kann für eine flache Bodenbearbeitung ebenso schnell am Grubberzinken angebracht werden. Stehen zwei oder mehr verschiedene Formen von Flügelscharen 6 zur Auswahl, kann ebenso schnell das für den jeweiligen Anwendungsfall am besten geeignete Flügelschar 6 angebracht werden. Es versteht sich, daß in den Zeichnungen nur eine Ausführungsform des Flügelschars zur Erläuterung der Erfindung dargestellt ist.
Anzumerken ist auch, daß der Scharträger 2 schmal gehalten ist und vom Grubberzinkenstiel 1 sich lediglich nach rückwärts erstreckt, insgesamt aber über seine ganze Ausdehnung deutlich schmaler ist als das Mittelschar 3, 4 so daß, wenn der Grubberzinken ohne das Flügelschar 6 benutzt wird, der Scharhalter 2 nicht vom durchgearbeiteten Boden beaufschlagt wird und dadurch Verschleiß vermieden wird.

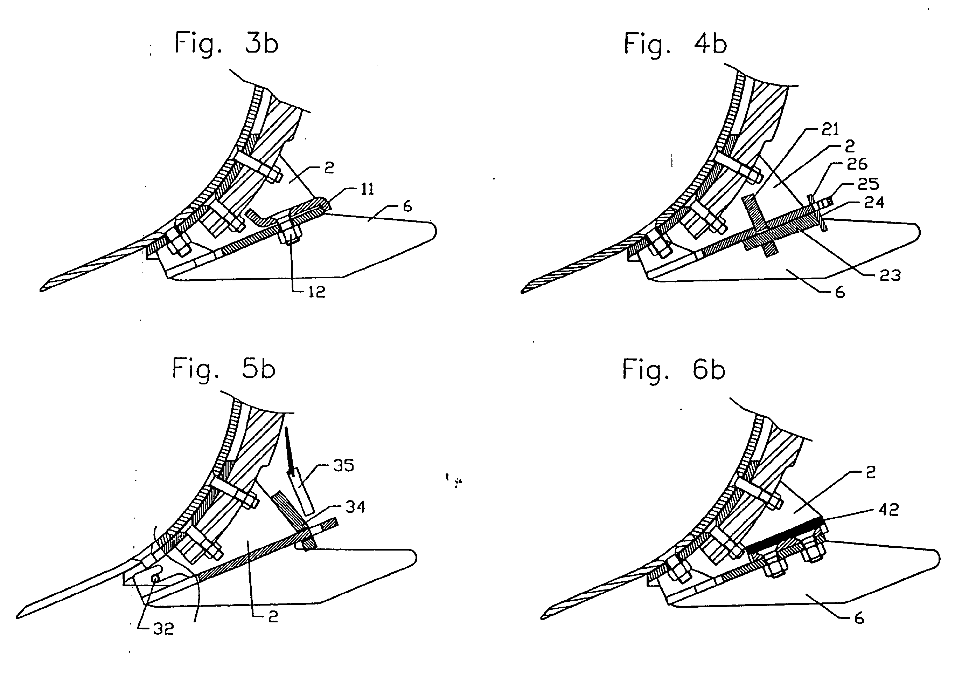

Im folgenden werden nun sechs beispielsweise Ausführungsformen der Schnellbefestigung des Flügelschars 6 am Scharträger 2 erläutert. Bei der in Figur 2 dargestellten Ausführungsform findet die in den Figuren 4a, 4b dargestellte Ausführungsform Anwendung, wobei jedoch der Sicherungskeil in Figur 2 aus Gründen der Klarheit weggelassen ist.

Die Figuren 3a bis 8a zeigen jeweils das Flügelschar 6 in perspektivischer Darstellung mit dem daran jeweils angeordneten Element der Schnellbefestigung. Am vorderen Ende weist das Flügelschar 6 jeweils zwei aufgekantete Führungsnasen 7 auf, die mit den Außenflächen der beiden Schenkel des Scharträgers 2 (siehe Figur 2) zusammenwirken und das vordere Ende des Flügelschars 6 jeweils am Scharträger 2 zentrieren bzw. führen. Die Figuren 4b bis 8b zeigen jeweils in Seitenansicht das am übrigen Grubberzinken montierte Flügelschar 6.

Die Ausführungsform nach den Figuren 3a und 3b zeigt die Schnellbefestigung des Flügelschars 6 mit einem am Scharträger 2 angeordneten Anlageblech 11 mit einer darin sitzenden Schraube mit Mutter 12 und einem im Flügelschar 6 gebildeten Schraubenloch 13. Es braucht also nur die Schraubenmutter 12 gelöst zu werden, um das Flügelschar 6 abnehmen bzw. aufstecken zu können.

Eine Abwandlung dieser Ausführungsform ist die Erweiterung des Schraubenlochs 13 im Flügelschar 6 zu einem bis zum hinteren Ende laufenden Schlitz. Dann braucht zum Anund Abmontieren des Flügelschars die Schraubenmutter lediglich etwas gelockert zu werden, um dann das Flügelschar mit dem den Schraubenschaft aufnehmenden Schlitz zwischen Mutter und Anlageplatte 11 einschieben bzw. herausziehen zu können. Die umgekehrte Anordnung ist ebenfalls möglich, nämlich ein nach hinten ausmündender Schlitz in der Anlageplatte 11.

Die Figuren 4a und 4b zeigen eine Ausführungsform, bei welcher am Scharträger 2 eine feste Lasche 21 angeschweißt ist. Das Flügelschar weist in seinem Mittelteil ein entsprechend bemessenes längliches Querloch 22 auf, in welches die Lasche 21 eingreift, und ein Keil 23 mit Stirnplatte 24 greift von hinten unter das Flügelschar 6 und durchsetzt eine Öffnung im unteren Bereich der Lasche 21, wobei die Stimplatte 24 ihrerseits eine Öffnung aufweist, die eine rückwärtige Öse 25 des Flügelschars aufnimmt. Durch die Öse wird ein Sicherungskeil oder Sicherungselement 26 gesteckt. Damit ist die Verbindung völlig verschraubungsfrei hergestellt. Durch Lösen des Sicherungskeils 26 kann dieser entfernt und damit das Flügelschar 6 äußerst schnell und einfach abgenommen und ebenso wieder montiert werden.

Die Ausführungsform nach den Figuren 5a und 5b zeigt eine Schnellbefestigung, wo die Führungsnasen 7 nach hinten weisende Schlitze 31 aufweisen, mit denen sie in seitliche Zapfen 32 des Scharträgers 2 einhängbar sind. Eine Öse 33 am hinteren Ende des Flügelschars 6 wird durch eine Öffnung eines hinten am Scharhalter 2 angeordneten Querblechs 34 durchgesteckt, und ein Sicherungssplint 35, der in die Öse 33 eingesteckt wird, sichert die Verbindung, so daß das Flügelschar 6 nicht nach vorne aus der Halterung herausrutschen kann. Auch diese Ausführungsform ist völlig verschraubungsfrei.

Die Ausführungsform nach den Figuren 6a und 6b zeigt eine weitere verschraubungsfreie Schnellbefestigung. Auf dem Mittelteil des Flügelschars 6 ist eine nach hinten sich konisch verjüngende Schwalbenschwanzplatte 41 aufgeschraubt. Sie kann selbstverständlich auch angeschweißt sein. Der Scharträger 2 weist eine entsprechende Schwalbenschwanzaufnahme auf. Die Montage des Flügelschars 6 erfolgt durch Einschieben der Platte 41 in die Aufnahme 42, wobei die Fixierung durch Selbsthemmung gegebenenfalls bei leichtem Andrücken oder Anklopfen hergestellt wird. Die Verjüngung der Platte 41 und der Aunahme 42 erfolgt nach rückwärts, also in Richtung des Erddrucks auf das Flügelschar 6, so daß der Arbeitsdruck die Verbindung selbsttätig unterstützt. Das Lösen erfolgt durch einfaches Herausklopfen des Flügelschars 6 nach vorne.

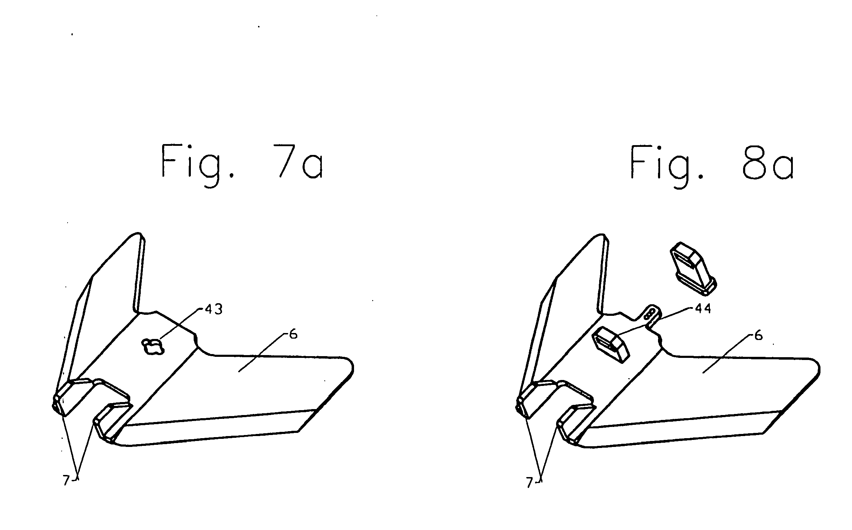

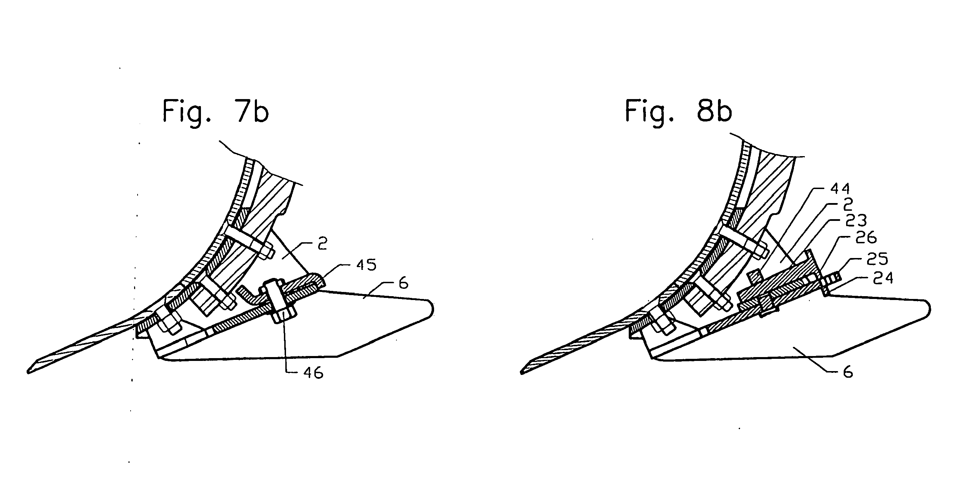

Die Ausführungsform nach den Figuren 7a und 7b hat statt einer Schraubverbindung, wie sie bei der Ausführungsform nach den Figuren 3a und 3b vorgesehen ist, einen Bajonettverschluß 46, der mit dem Anlageblech 45 und dem Ausschnitt 43 entsprechend zusammenwirkt.

Eine Abwandlung oben beschriebener Ausführungsform nach den Figuren 4a und 4b ist in den Figuren 8a und 8b gezeigt. Bei dieser Ausführungsform wird die Lasche 44 von unten durch den Flügel und die Gegenplatte des Scharträgers 2 gesteckt und ebenfalls mit Keil und Sicherungselement verbunden. Es versteht sich von selbst, daß die Lasche am Scharflügel auch fest verbunden sein kann.

## Patentansprüche

1. Grubberzinken, bestehend aus einem Stiel (1), einem daran angebrachten Scharträger (2), einem Mittelschar (3, 4) und einem Flügelschar (6), **dadurch gekennzeichnet, daß** das Flügelschar (6) mittels einer eine Formschlussverbindung herstellenden Schnellbefestigung an der Unterseite des Scharträgers (2) montierbar ist,
wobei das Mittelschar (3, 4) und das Flügelschar (6) als gesonderte Teile ausgebildet und einzeln auswechselbar am Scharträger (2) befestigt sind.

2. Grubberzinken nach Anspruch 1, wobei der Scharträger seitlich nicht wesentlich über den Stiel (1) übersteht und eine geringere Breite als das Mittelschar (3, 4) hat.

3. Grubberzinken nach Anspruch 1 oder 2, wobei das Flügelschar (6) mindestens an seinem vorderen Endbereich Führungsnasen (7) aufweist, welche mit den Seitenflächen des Scharträgers (2) zusammenwirken.

4. Grubberzinken nach einem der Ansprüche 1 bis 3 ,wobei die Führungsnasen (7) durch Aufkantungen oder dergleichen im vorderen Endbereich des Flügelschars (6) gebildet sind.

5. Grubberzinken nach einem der Ansprüche 1 bis 4, wobei die Schnellbefestigung eine mit der Oberseite des Mittelteils des Flügelschar (6) zusammenwirkende Anlageplatte (11) oder ein gleichwirkendes Bauteil und eine ein Durchgangsloch (13) oder einen nach hinten ausmündenden Längsschlitz des Flügelschars (6) durchsetzende Schraube oder Bajonettverschluß 46aufweist.

6. Grubberzinken nach einem der Ansprüche 1 bis 4, wobei die Schnellbefestigung eine ein Querloch (22) des Flügelschars (6) durchsetzende, am Scharträger (2) angeordnete Lasche (21) sowie einen an der Unterseite des Flügelschars (6) anliegenden, durch eine Öffnung der Lasche (21) gesteckten Keil (23) aufweist.

7. Grubberzinken nach einem der Ansprüche 1 bis 4, wobei die Schnellbefestigung durch eine Lasche gebildet ist, die von unten durch ein Loch des Flügelschars und des Scharhalters gesteckt ist, und die mittels eines Keils und eines Sicherungselements verbunden ist.

8. Grubberzinken nach Anspruch 6, wobei der Keil (23) von hinten her in die Öffnung der Lasche (21) eingesteckt ist und an seinem rückwärtigen Ende eine Stirnplatte (24) aufweist, das Flügelschar (6) mit einer hinteren Öse (25) versehen ist, die von einer Öffnung der Stirnplatte (24) aufgenommen wird, und ein Sicherungskeil (26) durch die Öse (25) steckbar ist.

9. Grubberzinken nach einem der Ansprüche 1 bis 4, wobei die Schnellbefestigung am vorderen Ende der Flügelschar (6) gebildete Laschen (7) mit in Längsrichtung verlaufenden, nach hinten ausmündenden bajonettartigen Schlitzen (31) aufweist, in welche am Scharträger (2) angeordnete Stifte oder Zapfen (32) eingreifen, und eine am hinteren Ende des Flügelschars (6) angeordnete Öse (33) aufweist, die durch eine Öffnung eines Gegenelements (34) am Scharträger (2) durchsteckbar und mit einem Sicherungssplint (35) sicherbar ist.

10. Grubberzinken nach einem der Ansprüche 1 bis 4, wobei die Schnellbefestigung eine an dem Flügelschar (6) montierte Schwalbenschwanzplatte (41), die sich nach hinten konisch verjüngt, und eine dazu komplementär geformte, am Scharträger (2) angeordnete Schwalbenschwanzaufnahme (42) aufweist.

## Claims

1. Cultivator tine, consisting of a stem (1), a share support (2) attached thereto, a center share (3, 4) and a plough share (6), **characterised in that** the plough share (6) can be mounted to the underside of the share support (2) by means of a quick mounting creating a form-fitting connection, the center share (3, 4) and the plough share (6) being configured as separate parts and being fixed to the share support (2) so as to be exchangeable individually.

2. Cultivator tine according to claim 1, wherein the share support does not project substantially beyond the stem (1) laterally, and has a smaller width than the center share (3, 4).

3. Cultivator tine according to claim 1 or 2, wherein the plough share (6), at least in its front end region, has guiding lugs (7) which interact with the lateral surfaces of the share support (2).

4. Cultivator tine according to any one of claims 1 to 3, wherein the guiding lugs (7) are formed by raised edgings or the like in the front end region of the plough share (6).

5. Cultivator tine according to any one of claims 1 to 4, wherein the quick mounting presents an abutment plate (11) interacting with the upper side of the center part of the plough share (6), or a part acting similarly, and a screw or a bayonet closure (46) passing through a through-hole (13) or a longitudinal slot of the plough share (6) opening towards the rear.

6. Cultivator tine according to any one of claims 1 to 4, wherein the quick mounting presents a tab (21) arranged on the share support (2) and passing through a transverse bore (22) of the plough share (6), as well as a wedge (23) abutting against the underside of the plough share (6) and inserted through an opening in the tab (21).

7. Cultivator tine according to any one of claims 1 to 4, wherein the quick mounting is formed by a tab that is inserted from below through a hole in the plough share and in the share mount and connected by means of a wedge and a securing element.

8. Cultivator tine according to claim 6, wherein the wedge (23) is inserted into the opening of the tab (21) from behind and presents a front plate (24) on its rear end, the plough share (6) is provided with a rear eyelet (25) which is received by an opening of the front plate (24), and a securing wedge (26) can be inserted through the eyelet (25).

9. Cultivator tine according to any one of claims 1 to 4, wherein the quick mounting presents tabs (7) formed on the front end of the plough share (6) and having bayonet-like slots (31), extending in the longitudinal direction and opening towards the rear, in which pins or studs (32) arranged on the share support (2) engage, and an eyelet (33) arranged on the rear end of the plough share (6) which can be inserted through an opening of a counter element (34) on the share support (2) and secured there by means of a safety split pin (35).

10. Cultivator tine according to any one of claims 1 to 4, wherein the quick mounting has a dovetail plate (41) mounted on the plough share (6) and tapering conically towards the back, and a dovetail recess (42) shaped complementarily thereto and arranged on the share support (2).

## Revendications

1. Dent de cultivateur, constitué d'un manche (1), d'un support de soc (2) fixé sur celui-ci, d'un soc central (3, 4) et d'un soc à ailettes (6), **caractérisé en ce que** le soc à ailettes (6) peut être monté au niveau de la face inférieure du support de soc (2) au moyen d'une fixation rapide établissant un assemblage par forme, dans laquelle le soc central (3, 4) et le soc à ailettes (6) sont conçus sous forme de pièces séparées et sont fixés au support de soc (2) de façon à être interchangeables séparément.

2. Dent de cultivateur selon la revendication 1, dans laquelle le support de soc ne dépasse pour l'essentiel pas latéralement du manche (1) et présente une largeur inférieure à celle du soc central (3, 4).

3. Dent de cultivateur selon la revendication 1 ou 2, dans laquelle le soc à ailettes (6) présente des ergots de guidage (7) au moins au niveau de son extrémité antérieure, lesdits ergots de guidage coopérant avec les faces latérales du support de soc (2).

4. Dent de cultivateur selon l'une quelconque des revendications 1 à 3, dans laquelle les ergots de guidage (7) sont formés par des rebords ou similaires au niveau de l'extrémité antérieure du soc à ailettes (6).

5. Dent de cultivateur selon l'une quelconque des revendications 1 à 4, dans laquelle la fixation rapide présente une plaque d'appui (11) coopérant avec la face supérieure de la partie centrale du soc à ailettes (6) ou un élément ayant la même fonction ainsi qu'une vis ou fermeture à baïonnette (46) passant à travers un trou de passage (13) ou une fente longitudinale débouchant vers l'arrière du soc à ailettes (6).

6. Dent de cultivateur selon l'une quelconque des revendications 1 à 4, dans laquelle la fixation rapide présente une languette (21) disposée sur le support de soc (2) et passant à travers un trou transversal (22) du soc à ailettes (6), ainsi qu'une cale (23) passée à travers une ouverture de la languette (21) et en appui sur la face inférieure du soc à ailettes (6).

7. Dent de cultivateur selon l'une quelconque des revendications 1 à 4, dans laquelle la fixation rapide est formée par une languette qui est introduite par le bas à travers un trou du soc à ailettes et du porte soc et qui est assemblée au moyen d'une cale et d'un élément de sécurité.

8. Dent de cultivateur selon la revendication 6, dans laquelle la cale (23) est introduite par l'arrière dans l'ouverture de la languette (21) et présente une plaque frontale (24) au niveau de son extrémité arrière, le soc à ailettes (6) étant muni d'un oeillet arrière (25) qui est logé dans une ouverture de la plaque frontale (24) et une cale de sécurité (26) pouvant être passée à travers l'oeillet (25).

9. Dent de cultivateur selon l'une quelconque des revendications 1 à 4, dans laquelle la fixation rapide présente des languettes (7) formées au niveau de l'extrémité antérieure du soc à ailettes (6) avec des fentes (31) de type baïonnettes évoluant dans le sens de la longueur et débouchant vers l'arrière, dans lesquelles engrènent des broches ou tenons (32) disposés sur le support de soc (2), et présente un oeillet (33) disposé au niveau de l'extrémité arrière du soc à ailettes (6) qui peut être passé à travers une ouverture d'un contre-élément (34) au niveau du support de soc (2) et peut être bloqué au moyen d'une goupille de sécurité (3 5).

10. Dent de cultivateur selon l'une quelconque des revendications 1 à 4, dans laquelle la fixation rapide présente une plaque à queue d'aronde (41) montée au niveau du soc à ailettes (6), qui se rétrécit en forme de cône vers l'arrière, et
présente un logement à queue d'aronde (42) de forme complémentaire à celle-ci, disposé au niveau du support de soc (2).
